# DEMANDE DE BREVET EUROPEEN

(11) **EP 0 629 338 A1**
(43) Date de publication de la demande: **21.12.1994**
(21) Numéro de dépôt: 94870095.0
(22) Date de dépôt: 13.06.1994
(51) Int. Cl.: A01C 23/02

(54) **Patin d'épandage de lisier ou autres engrais**

(30) Priorité: 16.06.1993 BE 9300613
(71) Demandeur: ETS JOSKIN S.A., B-4630 Soumagne (BE)
(72) Inventeur: Joskin, Victor, B-4630 Soumagne (BE)
(74) Mandataire: Vanderperre, Robert

(57) **Abrégé**

Le patin comporte au moins une goulotte d'épandage traînante (7), suspendue à un châssis avec une inclinaison suivant un angle aigu par rapport au sol et au sens de progression, et un coutre circulaire (8) placé verticalement à l'avant de la goulotte et dans l'axe de celle-ci. La goulotte traînante (7) possède une extrémité antérieure à profil effilé. Un système de ressorts (15, 17) à action en cascade assure le maintien d'une hauteur de travail satisfaisante quelle que soit la pression de travail appliquée sur le patin.

## Description

La présente invention est relative aux dispositifs d'épandage et d'injection de lisier ou autres engrais en prairies, et en particulier à un patin pour de tels dispositifs.

On connaît différents modèles de patins destinés à déposer le lisier directement à la base de la végétation ou à très faible profondeur. Mais tous les modèles connus présentent des défauts en matière de bourrage, de dégats occasionnés à la pelouse et de précision d'épandage, consécutifs à leur conception recourbée vers le sens de marche. Ces patins sont susceptibles d'arracher la végétation quand celle-ci présente un enchevêtrement de racines et de résidus ou quand le sol présente une dénivellation. De plus, il agit littéralement à la manière d'une pelle, ramassant l'herbe et la terre arrachées ainsi que tous déchets trouvés sur son passage et accumulant le tout au creux de sa courbe et même sur tout son pourtour; cet amas finit par traîner derrière le patin, risquant ainsi de disperser le lisier déposé. Enfin, une partie de cet amas se détache de temps à autre, laissant çà et là des paquets de déchets qui entraînent la mort de la végétation à cet endroit et provoquent des amas de pourriture pour la récolte suivante.

Certains modèles de patins présentent en outre un coutre vertical généralement placé à la base du patin pour pratiquer une rainure dans le sol. Mais de tels coutres verticaux présentent d'importants risques d'arrachage de la végétation à l'endroit de la découpe, et de bourrage au sein du dispositif d'épandage.

L'invention a pour but de remédier à ces inconvénients en proposant un patin mobile offrant le plus faible risque de bourrage, de dommages à la végétation et de dispersion intempestive du lisier déposé.

Ce but est atteint, suivant l'invention, par un patin d'épandage comportant au moins une goulotte d'épandage traînante suspendue avec une inclinaison suivant un angle aigu par rapport au sol et au sens de progression, et un coutre circulaire placé verticalement à l'avant de la goulotte et dans l'axe de celle-ci.

De préférence, la goulotte traînante possède une extrémité antérieure à profil effilé de manière à démêler et écarter la végétation pour former un couloir dans la pelouse.

La profondeur de pénétration du coutre circulaire dans le sol est réglable et l'axe de travail du dispositif par rapport au châssis de fixation peut varier constamment tout en conservant la position parallèle de la base de la goulotte par rapport au sol.

La combinaison d'un coutre circulaire antérieur et d'une goulotte traînante d'alignement du lisier assure le dépôt de l'engrais dans les meilleures conditions à la base de la végétation, de manière telle que l'engrais se trouve déposé dans une petite rainure découpée dans le sol, à la base de la végétation.

Un autre aspect de l'invention concerne un système de stabilisation de la hauteur de travail du patin d'épandage de manière à assurer toujours un débattement suffisant du châssis de fixation, quelle que soit la pression transférée par le châssis sur le patin d'épandage.

Grâce à ce système de stabilisation de la hauteur de travail, qui utilise des ressorts à effets en cascade, le patin d'épandage ne peut plus s'enfoncer trop profondément dans le sol, garantissant ainsi toujours une continuité de la progression du charroi tout en évitant aussi d'endommager la pelouse ou le sol. Cet effet converge avantageusement avec celui de la combinaison de la goulotte d'épandage et du coutre circulaire.

L'invention est décrite dans ce qui suit avec plus de détails à l'aide des dessins annexés dans lesquels :
la figure 1 montre une vue d'ensemble d'un patin d'épandage suivant l'invention;
la figure 2 montre le dispositif de la figure 1, dans lequel le patin a rencontré une dénivellation montante du sol;
la figure 3 montre le dispositif de la figure 1, dans lequel le patin a rencontré un creux dans le sol;
la figure 4 est un graphique illustrant la stabilisation de la hauteur de travail du dispositif selon l'invention;
les figures 5, 6 et 7 sont trois vues en plan de deux patins d'épandage montés en suiveur, illustrant le mécanisme de stabilisation latérale avec retour automatique en position centrale;
la figure 8 montre le patin d'épandage de la figure 1 en position de repos;
les figures 9 et 10 sont des vues respectivement en plan et en coupe d'une goulotte suivant l'invention, illustrant un épandage de lisier.

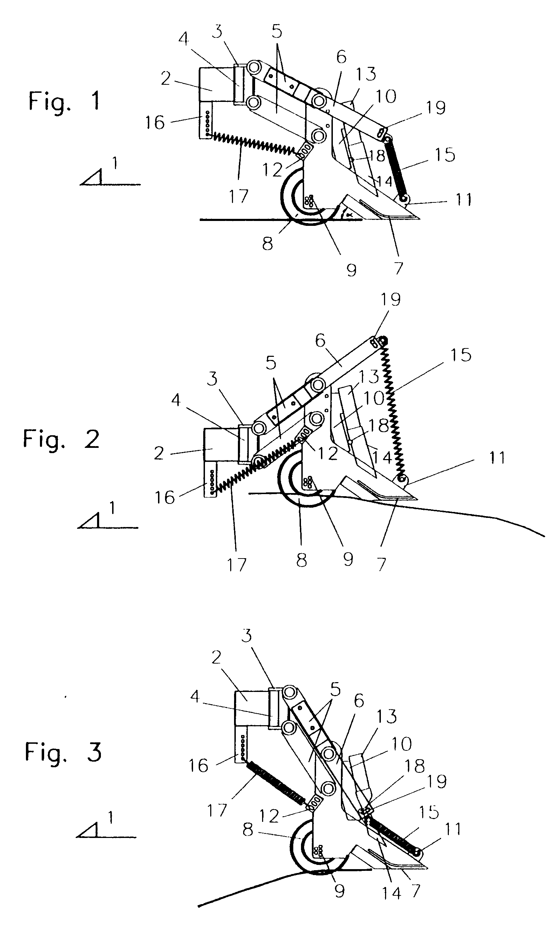

Le patin d'épandage selon l'invention est représenté schématiquement à la figure 1. La flèche 1 désigne le sens de progression dans lequel travaille l'invention.

L'ensemble du système de patin se monte sur un châssis quelconque 2 par un moyen de fixation 3 enserrant un axe tournant 4. La fixation 3 soutient un système parallélogramme 5 auquel est fixé un dispositif dont il permet de préserver l'angle d'attaque par rapport au sol. Le parallélogramme 5 est prolongé par un étau 6. Le dispositif d'épandage se compose essentiellement d'une goulotte traînante 7 et d'un coutre circulaire 8 disposé verticalement à l'avant de la goulotte et dans l'axe de celle-ci. Le coutre est réglable en hauteur grâce aux différents trous de fixation 9, et des pattes de fixation 10, 11 et 12. Le premier support 10 soutient la tuyauterie d'amenée du lisier, à savoir, une conduite d'alimentation 13, suivie d'une section de tuyau souple en caoutchouc 14, constituant la bouche de dépôt du lisier.

Le système de parallélogramme 5 permet à tout moment de conserver la pente mathématique de la goulotte 7 avec un angle prédéterminé, environ 400 par exemple, de manière que la base de la goulotte 7 se trouve toujours bien à plat sur le sol, évitant ainsi d'endommager la pelouse ou le sol. Ceci s'applique aussi bien lorsque l'on modifie la hauteur de travail que lorsque le patin rencontre une dénivellation montante dans le terrain, comme représenté en figure 2.

Lorsque le patin rencontre un creux dans la pelouse, le système offre un débattement également très important vers le bas et le parallélogramme maintient la base de la goulotte bien à plat, comme représenté en figure 3.

Dans l'exemple illustré, la goulotte 7 se termine avantageusement par un patin de maintien de la profondeur de travail dans le sol.

Les supports de fixation 11 sont liés au système parallélogramme 5 par un ou plusieurs ressorts de pression sur le sol 15. Le support de fixation 12 est lié à une patte de fixation 16 fixée au châssis 2 par un ressort 17 de stabilisation. Le dispositif comprend encore deux tiges-mâchoires, l'une 18 fixée sur le support 10 de conduites d'alimentation 13, au niveau de la bouche de dépôt 14, et l'autre 19 fixée sur l'étau 6 de prolongement du bras supérieur du côté supérieur du système parallélogramme 5.

L'ensemble de l'outil est fixé à un châssis 2 qui le supporte. L'utilisation du système suppose qu'il soit mis en mouvement au sein d'un charroi quelconque et qu'il soit alimenté en lisier.

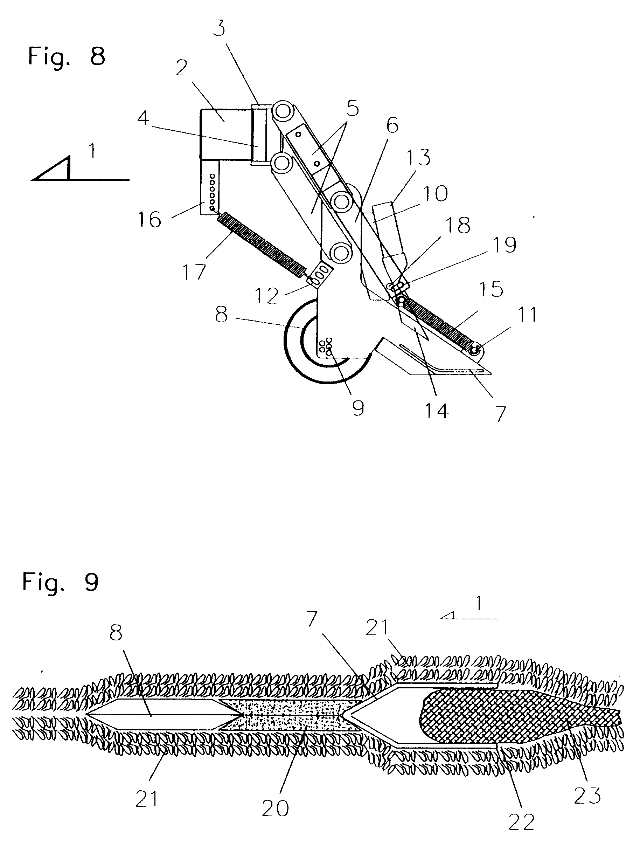

En fonctionnement, le coutre circulaire 8 tourne sur lui-même et incise une rainure dans le sol à une profondeur déterminée en fonction du trou de fixation 9 choisi. Le coutre 8 est immédiatement suivi de la goulotte 7, laquelle repose sur le sol et est traînée dans le sens de progression 1 du charroi. La goulotte 7 est dotée d'une extrémité antérieure ayant un profil effilé (visible sur la vue en plan de la figure 9) de manière à démêler et écarter les brins d'herbe, formant une sorte de "couloir" dans la pelouse et cela sans possibilité de bourrage. Dans le même temps, le lisier amené par la conduite d'alimentation 13 et la bouche 14, tombe au creux de la goulotte traînante 7, d'où il coule sans éclaboussure dans le "couloir" formé dans la pelouse, et de là dans la rainure incisée dans le sol par le coutre circulaire 8.

Les liaisons à ressorts 15 et 17 exercent une action différée mais combinée de manière à assurer toujours un débattement suffisant du châssis de fixation par rapport au sol, quelle que soit la pression transférée par le châssis sur le patin d'épandage. La plage d'action des ressorts de tension est sensiblement élargie du fait que les ressorts postérieurs 15 n'entrent en action qu'à partir d'une certaine hauteur de travail par rapport au châssis 2.

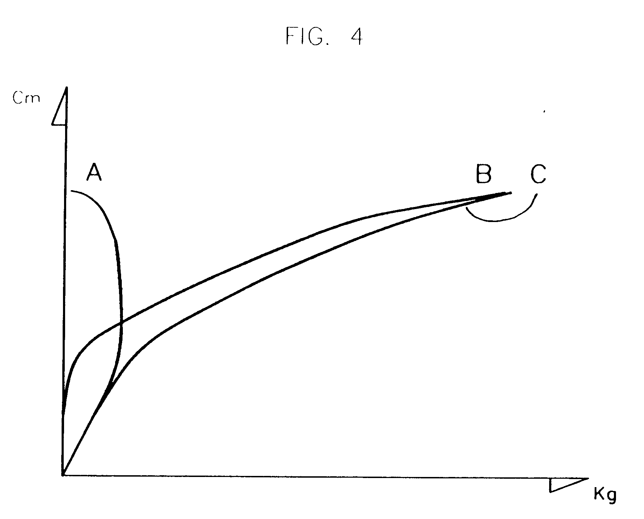

La figure 4 illustre l'action combinée des ressorts 15 et 17 dans le processus de stabilisation de la hauteur de travail en fonction de la pression transférée par le châssis sur le patin d'épandage. En abscisses est portée la pression sur le patin d'épandage et en ordonnées est portée la hauteur de débattement par rapport au sol. La courbe A représente l'action du ressort 17 : celui-ci commence à agir sous l'effet du poids propre de l'ensemble du dispositif dans lequel est inclus le patin d'épandage. La courbe B représente l'effet des ressorts 15, lesquels n'entrent en action qu'à partir d'une certaine hauteur : ceci permet de choisir la charge externe transférée par le châssis 2 parmi une très large plage de pression possible. La courbe C illustre l'effet combiné des ressorts 15 et 17 : on observe que la variation de hauteur de travail du patin d'épandage est faible sur une large plage de pression, ce qui garantit en permanence un débattement suffisant vers le haut et vers le bas audit patin d'épandage. La pente de la fonction dépend de la résistance des ressorts choisis et du nombre de ressorts placés, ainsi que des trous choisis dans les pattes de fixation 12 et 16.

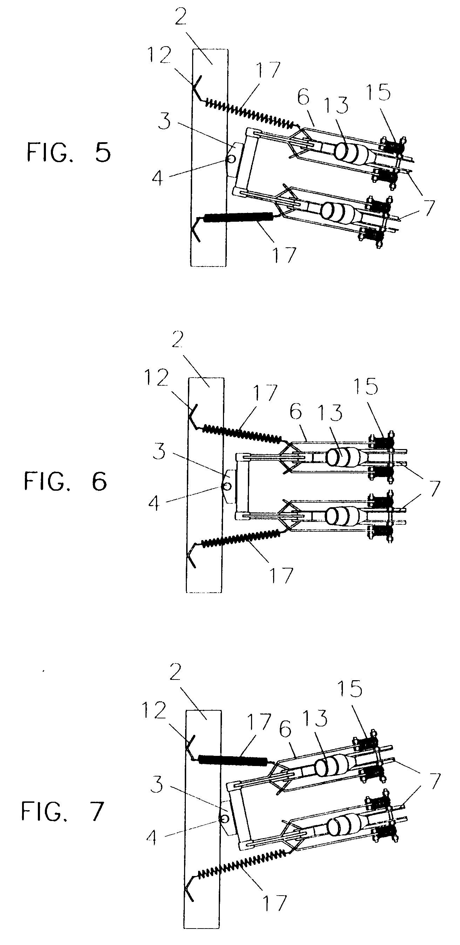

Le pivot vertical 4 laisse la possibilité au patin d'osciller de manière limitée vers la droite et vers la gauche, afin que ce dernier ne subisse aucune pression dommageable dans les virages imprimés par le charroi pendant le travail. En effet, un système rigide subirait une pression du côté inverse à la courbe; il en résulterait un important risque de casser le patin ou d'endommager la pelouse ou le sol. Les patins peuvent être montés individuellement ou être groupés pour former un élément suiveur articulé autour d'un seul pivot 4. Un élément-suiveur est toujours ramené en ligne par deux ressorts 17 de force égale et agissant de manière symétriquement opposée sur le dispositif de patins. L'effet de stabilisation latérale est illustré aux figures 5, 6 et 7.

La figure 8 représente le système de patin en position de repos, c'est-à-dire lorsque le châssis 2 qui le supporte est relevé en position de transport pour les déplacements ou les manoeuvres du charroi. Lorsque le châssis de fixation 2 est relevé, le patin pend littéralement au châssis, ramenant le système parallélogramme 5 dans sa position la plus basse : les mâchoires 18 et 19 pivotent l'une vers l'autre pour assurer la fermeture centrale de la bouche de dépôt de lisier par pincement. L'arrivée de lisier se trouve ainsi automatiquement interrompue dès que la goulotte 7 n'est plus en contact avec le sol. On évite ainsi toute coulée intempestive quand l'appareil ne travaille pas.

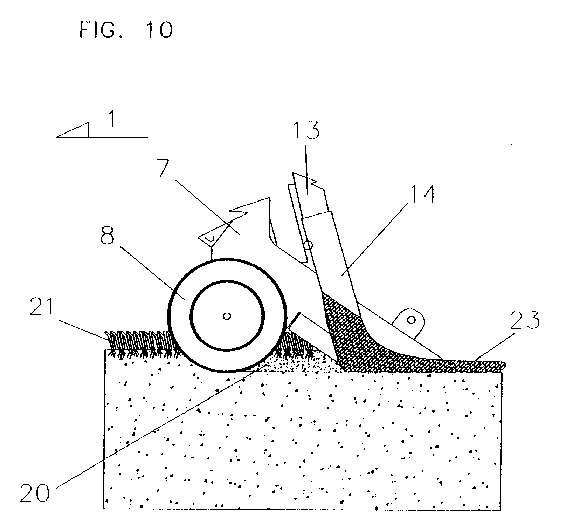

Sur la figure 9 est illustrée la rainure 20 pratiquée par un coutre circulaire 8 dans un sol, ainsi que l'effet de la goulotte traînante 7 dans la végétation. L'extrémité antérieure effilée de la goulotte et ses parois latérales permettent d'écarter autant que possible la végétation 21 sans l'arracher, d'éviter que des résidus ne s'accumulent sur le pourtour, et de former un couloir 22 bien net dans la végétation. C'est dans cette rainure 20 et ce couloir 22 que le patin dépose le lisier 23 sans risque d'éclaboussure. La figure 10 illustre le dépôt de lisier 23 dans la rainure 20 et le couloir 22 formés par un patin d'épandage.

Dans ce qui précède, il a été question d'une seule goulotte traînante pour faciliter la compréhension du texte mais, comme représenté aux dessins, un patin d'épandage de lisier suivant l'invention peut comporter une ou plusieurs goulottes traînantes 7 montées en suiveur et plusieurs éléments-suiveurs peuvent être fixés sur un châssis commun.

## Revendications

1. Patin d'épandage de lisier ou autres engrais en prairies, caractérisé en ce qu'il comporte au moins une goulotte d'épandage traînante (7) suspendue à un châssis avec une inclinaison suivant un angle aigu par rapport au sol et au sens de progression, et un coutre circulaire (8) placé verticalement à l'avant de la goulotte et dans l'axe de celle-ci.

2. Dispositif suivant la revendication 1, caractérisé en ce que la goulotte traînante (7) possède une extrémité antérieure à profil effilé.

3. Dispositif suivant la revendication 1 ou 2, caractérisé en ce que la position du coutre circulaire (8) est réglable en hauteur.

4. Dispositif suivant la revendication 1, 2 ou 3, caractérisé en ce qu'il comprend un système de stabilisation de la hauteur de travail en fonction de la pression appliquée au dispositif.

5. Dispositif selon la revendication 4, caractérisé en ce que le système de stabilisation précité est constitué d'au moins un premier ressort (17) reliant la goulotte au châssis et d'au moins un deuxième ressort (15) reliant la goulotte à son dispositif de suspension, de manière que le deuxième ressort (15) n'entre en action que lorsque la hauteur de travail dépasse un certain niveau prédéterminé.

6. Dispositif suivant l'une des revendications 1 à 5, caractérisé en ce que la goulotte (7) est reliée au châssis par deux ressorts (17) disposés symétriquement de part et d'autre de la goulotte pour en assurer la stabilisation latérale.

7. Système de stabilisation de la hauteur de travail d'un patin d'épandage de lisier ou engrais, suspendu par un parallélogramme à un châssis de support, caractérisé en ce qu'il comprend un premier moyen de traction élastique (17) reliant le patin audit support et un deuxième moyen de traction élastique (15) reliant le patin au parallélogramme précité, de manière que le deuxième moyen de traction élastique n'entre en action que lorsque la hauteur de travail dépasse un certain niveau prédéterminé.
